# EUROPEAN PATENT SPECIFICATION

(11) **EP 4 264 038 B1**
(45) Date of publication and mention of the grant of the patent: **01.01.2025**
(21) Application number: 21823996.0
(22) Date of filing: 29.11.2021
(51) Int. Cl.: F03D 1/02, F03D 1/04

(54) **A WIND TURBINE**
WINDTURBINE
ÉOLIENNE

(30) Priority: 21.12.2020 GB 202020244
(43) Date of publication of application: 25.10.2023
(73) Proprietor: Hart, Stephen, Burnley Lancashire BB10 2JX (GB)
(72) Inventor: Hart, Stephen, Burnley Lancashire BB10 2JX (GB)
(74) Representative: Forresters IP LLP
(86) International application number: PCT/GB2021/053108
(87) International publication number: WO 2022/136823

(56) References cited:
- WO-A1-2016/085858
- US-A- 4 140 433
- US-A1- 2006 002 786
- US-A1- 2011 014 038

## Description

### Field of the Invention

The present invention relates to wind turbines and in particular wind turbines with a compact design that is suitable for use in small scale electricity generation.

### Background of the Invention

For many years wind power has played a significant role in the generation of renewable energy. At present the majority of electricity generated using wind power is collected using wind farms, which can have anywhere between 5 and 100 individual wind turbines.

The size and scale of wind turbines to a certain extent dictates what sites can be used for wind farms. This in turn limits the number of wind farms in use. The cost of developing wind farm sites and installing and maintaining wind turbines also serve to limit the uptake of wind farms.

Although the renewable energy captured by wind turbines has clear environmental benefits, the erection of wind turbines across the landscape can also have a negative impact of the immediate environment in which they are sited.

In addition to the general disruption caused by the installation of the various infrastructure required to run and maintain them, wind turbines also have a significant impact on wildlife. In this regard, it is common for birds to be injured or even killed when they accidentally fly through a wind farm and get struck by the blades of a spinning wind turbine.

US 4,140,433 A and US 2006/002786 A1 relate to wind turbines that employ more than one annular ring of turbine blades. WO 2016/085858 A1 relates to a wind turbine with a wind shield to protect the turbine blades in high wind conditions.

### Summary of the Invention

With a view to providing a suitable alterative means for capturing renewable energy from wind power with a reduced environmental footprint the present invention provides a wind turbine suitable for use on a smaller scale.

In this regard the present invention provides a wind turbine in accordance with claim 1.

By arranging the aerofoil blades of the intake and output assemblies contrary to one another it is possible to enhance the relative rotation of the assemblies caused by an air flow focused on to the blades by the hub and the nozzle. This more efficient transfer of wind power into rotational movement that can run a generator allows for a more compact design of wind turbine that can be formed on a smaller scale from relatively lightweight materials.

In addition, by arranging the aerofoil blades of at least one of the assemblies so that they overlap with one another the wind turbine design of the present invention ensures that birds in flight will see the blades of the wind turbine as a solid object and fly around it rather than through it. In this way the safety of the wind turbine is enhanced.

Preferably the aerofoil blades of both the intake assembly and the output assembly may have an overlapping arrangement.

Preferably the output assembly may comprise a centrally located dome-shaped hub and/or a peripherally mounted divergent nozzle. In this way the air leaving the outlet assembly will be subjected to a drop in pressure which will suck air through the wind turbine and further increase the speed at which air passes the aerofoil blades.

Preferably the peripherally mounted nozzles of the intake and output assemblies may together define a de Laval nozzle and whereby the annular rings of aerofoil blades of both assemblies are located at the throat of the de Laval nozzle.

Preferably the dome-shaped hub of the intake assembly and/or the output assembly may house one or more operational components of the generator. By using one or both of the assembly hubs to house the generator it is possible to achieve an even more compact, self-contained wind turbine design. In essence, the hubs and the assemblies form a compact central core of the wind turbine.

Preferably the peripherally mounted nozzle of the output assembly may also comprise a flexible material supported by a structural framework mounted on the assembly.

By adopting a lightweight construction for the nozzles, it is envisaged that the wind turbine can be configured to fail in harsh weather conditions when wind speed may be too high.

That is to say, in certain wind conditions (e.g. storms) the flexible material of the nozzles will fail structurally, at which point the nozzles will no longer effectively focus air onto the aerofoiled blades. Instead the air will be free to flow around the core structure of the wind turbine rather than through the blades, where the blades or other elements of the wind turbine could be damaged.

Preferably one or more of the dome-shaped hubs are paraboloid. In this way the effect on air flow caused by the hub can be optimized as it approaches and/or moves away from the annular rings of aerofoil blades.

Preferably either the intake assembly or the output assembly may comprise a central axle upon which the other assembly is rotatably mounted. In this way the relative rotation of the intake and output assemblies is achieved.

Alternatively both the intake assembly and the output assembly may be rotatably mounted on a central axle.

In either preferred arrangement, the central axle may preferably be arranged to be mounted on a support structure that bears the weight of the wind turbine. In this way the wind turbine can be positioned in a suitable location that is subject to the wind. In one preferred example, the support structure may comprise a mast that serves to maintain the wind turbine at a suitable height above ground level.

Alternatively the support structure may be a bracket that can be attached to a wall of a building or some such similar existing structure.

Preferably at least one dome-shaped hub may be mounted on the central axle so as to retain the annular rings of aerofoil blades in position. It appreciated that using one or more hubs to retain the annular rings in position helps to minimise the number of components in the wind turbine, which in turn serves to deliver a compact and lightweight wind turbine design.

### Brief Description of the Drawings

The present invention will now be described with reference to a preferred embodiment shown in the drawings, wherein:
Figure 1 shows the core component of a preferred embodiment of the wind turbine of the present invention;
Figure 2 shows a front end view of the core component shown in Figure 1;
Figure 3 shows a preferred embodiment of a nozzle component employed by the wind turbine of the present invention; and
Figure 4 shows a diagram of the movement of air through a preferred embodiment of the wind turbine of the present invention.

### Detailed Description of the Preferred Embodiment

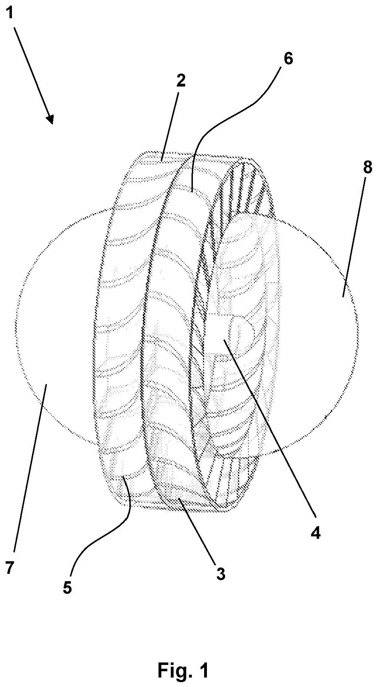

The wind turbine of the present invention will now be described with reference to a preferred embodiment thereof. In this regard, Figure 1 shows the main components of a preferred design of the wind turbine 1, albeit with the nozzle component omitted to enable the other components to be viewed more clearly.

The wind turbine 1 comprises a first assembly 2 and a second assembly 3 mounted adjacent to one another in close proximity on a central axle 4.

The first assembly 2, which will hereinafter be referred to as the intake assembly, comprises an annular ring of aerofoil blades 5. The aerofoil blades 5, which are evenly distributed around the periphery of the assembly 2, each have a first pitch angle.

Although not shown in the figures it will be appreciated by the skilled person that suitable connection means (e.g. such as spokes) will be provided between the inner wall of the annular ring and the central axle 4 so as to centralise the blades 5 about a common central axis that runs through the central axle 4. In the preferred embodiment the blades of the intake assembly are fixed relative to the central axle.

The second assembly 3, which will hereinafter be referred to as the output assembly, comprises an annular ring of aerofoil blades 6. The aerofoil blades 6, which are evenly distributed around the periphery of the assembly 3, each have a second pitch angle that runs counter to the first pitch angle adopted by the blades of the intake assembly.

As with the intake assembly 2, the annular ring of blades is connected to the central axle 4 by way of suitable connection means. It is envisioned that in a preferred embodiment of the invention, such as that shown in the figures, the blades of the intake assembly are fixed in position relative to the axle 4, whereas the blades of the output assembly 3 are mounted such that they are free to rotate relative to the axle 4, and indeed the intake assembly 2.

This arrangement facilitates the movement of the intake and output assemblies relative to one another. With that said, in other preferred embodiments of the wind turbine of the present invention the annular ring of the blades for each of the two assemblies may be rotatably mounted on a central axle. In these types of arrangement it is envisaged that the annular rings could be supported by the central intake and output hubs, although other connection means will be apparent to the skilled person upon consideration of the various aspects of the present invention.

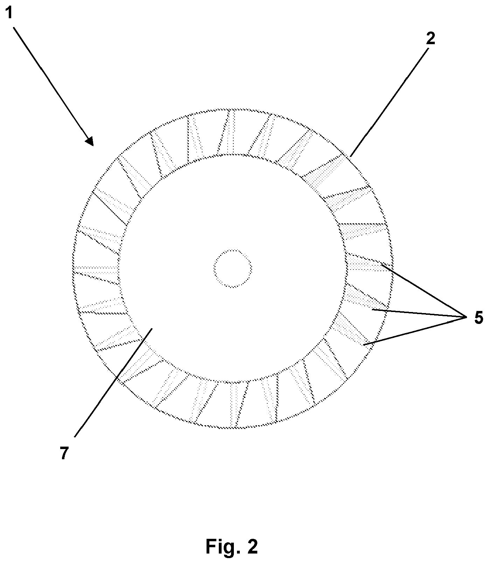

With reference to the blade arrangement shown in the figures, and in particular the front view shown in Figure 2, it will be seen that the aerofoil blades 5 of the intake assembly 2 are angled such that they project in a roughly clockwise direction. In contrast, the aerofoil blades 6 of the output assembly 3 are angled such that they project in a roughly counter-clockwise direction.

It is envisioned that the respective orientations of the intake and output blades 5, 6 could be switched without departing from the general concept of the present invention.

Further, whilst the profiles of the blades in both blade sets are shown in the figures as being the same, albeit mirror images of one another, it is envisioned that in some embodiments of the present invention the profile of the intake blades may differ from the profile of the output blades.

Although it is envisioned that a range of blade arrangements can be employed without departing from the general concept of the present invention, it is considered a key aspect of the wind turbine that the blades in at least one of the assemblies (i.e intake and output) are provided in an overlapping configuration.

By overlapping the blades in at least one of the assemblies it is possible to achieve a visual impression of a solid surface when the wind turbine if viewed from the front/rear; that is, essentially down the central axis of the wind turbine. The creation of a solid visual impression ensures that birds in flight see the wind turbine of the present invention as an obstacle to be avoided.

This greatly reduces the chances of a bird flying into the wind turbine as a result of them failing to perceive fast moving blades, which is not uncommon with typical wind turbine designs.

It is envisaged that the aerofoiled blades 5, 6 of both assemblies 2, 3 are preferably made from a suitable lightweight plastic material, such as injection moulded polycarbonates, although the skilled person will appreciate that alternative materials, such as carbon fibre, can be employed without departing from the general concept of the present invention. Indeed, it is envisaged that most components of the wind turbine structure could be formed from a lightweight plastic material to keep the manufacture and maintenance costs down.

As will be appreciated from Figure 1, the intake assembly 2 and output assembly 3 are positioned in close alignment on the central axle 4 so that the majority of the air entering the bladed annulus of the intake assembly 2 is fed through to the bladed annulus of the output assembly 3.

It is envisioned that tight manufacturing tolerances for the assemblies and the central axis should be sufficient to ensure that the majority of the air flows through the wind turbine by the desired route.

However, in preferred embodiments a seal may be provided at the point where the two assemblies are closest to one another to prevent the air being lost from the system at the point between the blades 5 of the intake assembly 2 and the blades 6 of the output assembly 3. For example, the seal may be formed by providing a skirt on one of the assemblies that extends over the adjacent assembly.

It will be appreciated that any sealing means that works to prevent air being lost from the system whilst at the same time permitting the relative movement of the blades of the intake/output assemblies can be suitably employed in the wind turbine of the present invention.

By adopting the close alignment of the two sets of blades 5, 6 a flow path through the intake and output assemblies is created. The disruption to the air flow caused by the static blades in the intake assembly 2 serves to enhance the effect of the air on the rotatably mounted blades when it reaches the output assembly 3.

In the preferred embodiment shown in the figures, therefore, the static intake axle 4 acts as the stator and the rotatable output assembly 3 acts as the rotor in a wind-driven electricity generator. To this end, it will be appreciated that the generator components (i.e. coil wire, magnets, etc) can be suitably distributed on the axle and the assemblies.

As blades are only provided around the periphery of the intake and output assemblies the central space can be employed to house the functional components associated with the generator or the wind turbine more generally.

In order to optimise the amount air incident on the bladed annuli of the two assemblies a centrally located hub 7 is provided at the front end of the intake assembly 2.

As will be described in more detail below, the hub 7 serves to channel air that would otherwise miss the bladed region of the wind turbine and hit the central region of the intake assembly. To this end, it is appreciated that the hub is generally dome-shaped to direct the air flow. Also hubs that are paraboloid in shape are considered particularly suitable in this regard.

Although not necessarily essential, in the preferred embodiment shown a second hub 8 is associated with the output assembly 3 at the rear of the wind turbine. It is envisaged that the provision of a suitably dome-shaped hub on the rear of the wind turbine will have a positive impact on the flow of air leaving the output assembly 3.

It will be appreciated that second hub 8 is shown as transparent to enable the central axle 4 to be seen. With that said, it is envisaged that providing at least one of the hubs in a transparent material would allow components housed within the core of the wind turbine to be visible. One possible use for this would be to accommodate a light source within the wind turbine that is powered by the wind and at the same time acts as a visual warning to birds in conditions of low light and darkness.

It is envisaged that in the preferred embodiment the first hub, the central axle and the annular ring of blades of the intake assembly are all fixed in position relative to one another. The output assembly, on the other hand, is free to rotate about the axle whilst at the same time being retained on the axle in close alignment with the intake assembly by the engagement of the second hub 8 on the end portion of the axle 4.

In the preferred embodiment the hubs are at least partially hollow. This provides an even greater space within the wind turbine to house the various functional components associated with the generator.

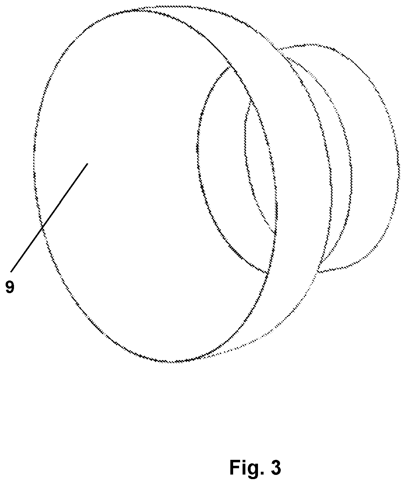

Although not shown in Figures 1 and 2, the wind turbine of the present invention is further provided with at least one nozzle 9. The nozzle 9, a preferred example of which is shown in Figure 3, is provided at least on the front of the wind turbine 1 so as to help focus the flow of air towards the bladed annulus of the intake/output assemblies.

In more preferred embodiments of the present invention, nozzles are provided not only on the front of the wind turbine but also at the rear. In this way the hubs and nozzles arranged on either side of the core bladed region of the wide turbine serve to maximise the characteristics of the air flowing through the bladed annuli of the intake and output assemblies.

The skilled person will appreciate that, provided the intake nozzle 9 has a generally convergent configuration and the output nozzle 10 has a generally divergent configuration, the actual profiles of the nozzles 9, 10 can be varied to suit.

In a particularly preferable arrangement the intake and output nozzles 9, 10 are arranged so as to define a De Laval style arrangement. In such cases, the annular rings of aerofoiled blades of the intake and output assemblies are situated at the choke point or 'throat' of the De Laval style arrangement.

Although the nozzle 10 of the output assembly may in some arrangements be formed of a solid construction, it is considered preferable that both nozzles 9, 10 they are formed from a flexible/thin lightweight material (e.g. low or high density polyethylene) that is mounted to a suitable framework to achieve the required nozzle shape.

It is envisaged that adopting a structurally weaker construction for the nozzles affords a certain level of protection to the overall structure of the wind turbine during storms and other periods of high wind speed. This is because the weaker construction of the nozzles ensures that it will typically fail in high wind conditions, which in turn will cause an immediate reduction in the wind resistance provided by the wind turbine.

Thus, following the sacrifice of the nozzle, air will no longer be focused on the blades of the wind turbine and it will instead be free to flow around the bladed annulus rather than through it.

Essentially, sacrificing the nozzle(s) leaves just the core component of the wind turbine design with its compact design, thus helping to avoid a situation where the blades of the wind turbine are caused to spin too fast, which could cause damage to the blades or the workings of the generator.

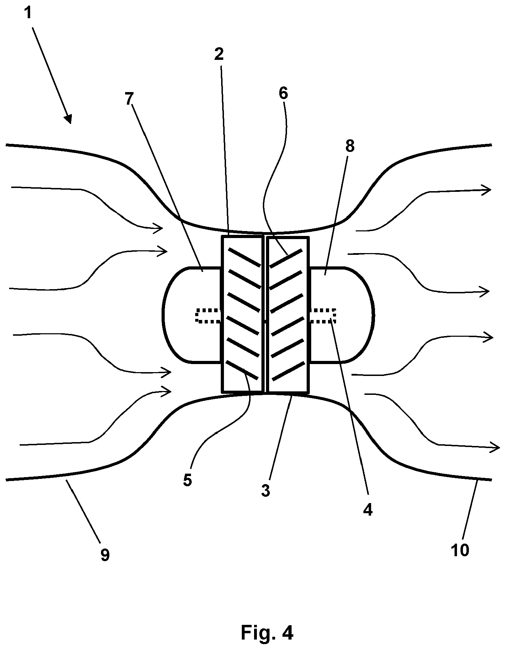

The operation of a preferred embodiment of the wind turbine of the present invention will now be described with reference to Figure 4, which shows a diagrammatic side view of the wind turbine 1 of Figure 1 with the intake nozzle 9 and output nozzles 10 present.

The flow of air into the wind turbine 1 is represented by the arrows entering the nozzle 9. As a result of the combined restriction created by the nozzle 9 on the outside and the intake hub 7 at the centre, the air flow is directed towards the blades 5 of the annular ring of the intake assembly 2. It will be appreciated that this restriction of the air flow compresses the air and increases its velocity before the air reaches the blades 5 of the intake assembly 2.

As the accelerated air flows through the intake assembly it is diverted by the fixed intake blades 5, which serve to further compress and accelerate the air before it reaches the rotatable blades 6 of the output assembly 3.

The compressed/accelerated air then urges the output blades 6, which are free to rotate relative to the central axle 4 of the wind turbine 1, the spin. It will be appreciated that this rotational movement is then employed to generate an electrical current that can then harnessed in accordance with existing processes.

In essence, in the preferred embodiment shown, the central axle 4 acts as the stator and the rotating output assembly 3 acts as the rotor. The skilled person will appreciate that the central axle and the output assembly will comprise the necessary components (e.g. wire coil wrapped around a metal core and a suitable magnet or magnets). Preferably the components are housed within the central cavity of the wind turbine that is defined one or more of the central hubs 7, 8.

It is envisaged that in alternative arrangements the intake assembly may be configured to act as a stator (either in combination with the axle or in place thereof) because it too experiences rotation relative to the output assembly.

In the embodiment shown, a hub 8 and a nozzle 10 are also provided at the output side of the wind turbine. It is envisaged that the hub 8 and nozzle 10 serve to create an expansion space downstream of the bladed region of the core component of the wind turbine.

As represented by the arrows shown in Figure 4, this expansion space creates a rapid reduction in the air pressure, which acts to suck the air away from the region downstream of the blades and in so doing further increases the velocity of the air flowing through the wind turbine.

In summary, the intake nozzle/hub combination pushes the air through the blades of the intake and output assemblies whilst the output nozzle/hub combination pulls the air through the blades of the intake and output assemblies. This combined approach enables helps to optimise the level of rotational movement that can be captured using a wind turbine that only has a relatively small and compact design.

It is envisioned that, in contrast to the large scale propeller based wind turbines deployed in typical wind farms that require acres of space, the compact design of the wind turbine of the present invention can be deployed in locations where space is at a premium.

In this regard, it is envisioned that the outer diameter of the wind turbine of the present invention, as defined by the leading edge of the intake nozzle and/or the trailing edge of the output nozzle, could be as small as 500mm and still generate a significant amount of energy from wind power.

In this regard it is envisaged that one or more of the wind turbine of the present invention could even be deployed in domestic properties. As such, they could be used very much in the same way that solar panels are presently used in end-user energy capture.

It is even envisaged that the wind turbine of the present invention could be scaled down to such an extent that it could be portable. As such, a user could transport the wind turbine to a desired location, which could be away from the main power grid, and then set it up to provide them with a ready supply of electricity.

## Claims

1. A wind turbine (1) comprising an intake assembly (2) and an output assembly (3) arranged adjacent one another on a common axis, said assemblies (2, 3) being rotatable relative to one another to work a generator that generates electrical energy;
each assembly (2, 3) comprising an annular ring of aerofoil blades (5, 6), wherein each of the intake assembly blades (5) has a first pitch and each of the output assembly blades (6) has a second pitch that is oriented contrary to first pitch;
the intake assembly (2) comprising a centrally located dome-shaped hub (7) and a peripherally mounted convergent nozzle (9), said hub and nozzle being configured to direct air moving through the wind turbine towards the aerofoil blades (5, 6) of the intake and output assemblies;
wherein the aerofoil blades (5, 6) of at least one of the intake and output assemblies have an overlapping arrangement such that, when viewed from along the common axis of rotation, it is not possible to see through the wind turbine; and
**characterised in that** the peripherally mounted convergent nozzle (9) of the intake assembly (2) is formed from a flexible material supported by a structural framework mounted on the intake assembly, wherein the nozzle (9) is configured to fail in high wind conditions , which in turn reduces the wind resistance provided by the wind turbine (1).

2. The wind turbine of claim 1, wherein the aerofoil blades (5, 6) of both the intake assembly and the output assembly have an overlapping arrangement.

3. The wind turbine of claim 1 or 2, wherein the output assembly (3) comprises a centrally located dome-shaped hub (8).

4. The wind turbine of claim 1, 2 or 3, wherein the output assembly (3) comprises a peripherally mounted divergent nozzle (10).

5. The wind turbine of claim 4, wherein the peripherally mounted nozzles (9, 10) of the intake and output assemblies together define a de Laval nozzle and whereby the annular rings of aerofoil blades (5, 6) of both assemblies are located at the throat of the de Laval nozzle.

6. The wind turbine of any one of claims 3 to 5, wherein the dome-shaped hub (8) of the output assembly (3) houses one or more operational components of the generator.

7. The wind turbine of any one of the preceding claims, wherein the dome-shaped hub (7) of the intake assembly (2) houses one or more operational components of the generator.

8. The wind turbine of claim 4, wherein the peripherally mounted divergent nozzle (10) of the output assembly (3) comprises a flexible material supported by a structural framework mounted on the output assembly, wherein the nozzle is configured to fail in high wind conditions, which in turn reduces the wind resistance provided by the wind turbine.

9. The wind turbine of any one of the preceding claims, wherein one or more of the dome-shaped hubs (7, 8) are paraboloid.

10. The wind turbine of any one of the preceding claims, wherein the intake (2) or the output assembly (3) comprises a central axle (4) upon which the other assembly is rotatably mounted.

11. The wind turbine of any one of claims 1-9, wherein the intake assembly (2) and the output assembly (3) are both rotatably mounted on a central axle (4).

12. The wind turbine of any one of claims 10 or 11, wherein the central axle (4) is arranged to be mounted on a support structure that bears the weight of the wind turbine (1).

13. The wind turbine of claim 10, 11 or 12, wherein at least one dome-shaped hub (7, 8) is mounted on the central axle (4) so as to retain the annular rings of aerofoil blades (5, 6) in position.

## Patentansprüche

1. Windturbine (1), umfassend eine Einlassbaugruppe (2) und eine Ausgabebaugruppe (3), die nebeneinander auf einer gemeinsamen Achse angeordnet sind, wobei die Baugruppen (2, 3) relativ zueinander drehbar sind, um einen Generator zu betreiben, der elektrische Energie erzeugt;
wobei jede Baugruppe (2, 3) einen ringförmigen Ring von Flügelprofilblättern (5, 6) umfasst, wobei jedes der Einlassbaugruppenblätter (5) eine erste Neigung aufweist und jedes der Ausgabebaugruppenblätter (6) eine zweite Neigung, die entgegen der ersten Neigung orientiert ist, aufweist;
wobei die Einlassbaugruppe (2) eine zentral positionierte kuppelförmige Nabe (7) und eine peripher montierte konvergente Düse (9) umfasst, wobei die Nabe und Düse dazu konfiguriert sind, Luft, die sich durch die Windturbine bewegt, hin zu den Flügelprofilblättern (5, 6) der Einlass- und Ausgabebaugruppe zu leiten;
wobei die Flügelprofilblätter (5, 6) von mindestens einer der Einlass- und Ausgabebaugruppe eine überlappende Anordnung aufweisen, so dass es bei Betrachtung entlang der gemeinsamen Drehachse nicht möglich ist, durch die Windturbine zu sehen; und
**dadurch gekennzeichnet, dass** die peripher montierte konvergente Düse (9) der Einlassbaugruppe (2) aus einem flexiblen Material gebildet ist, das von einem an der Einlassbaugruppe montierten strukturellen Rahmen getragen wird, wobei die Düse (9) dazu konfiguriert ist, bei starken Windbedingungen zu versagen, was wiederum den von der Windturbine (1) gebotenen Windwiderstand reduziert.

2. Windturbine nach Anspruch 1, wobei die Flügelprofilblätter (5, 6) sowohl der Einlassbaugruppe als auch der Ausgabebaugruppe eine überlappende Anordnung aufweisen.

3. Windturbine nach Anspruch 1 oder 2, wobei die Ausgabebaugruppe (3) eine zentral positionierte kuppelförmige Nabe (8) umfasst.

4. Windturbine nach Anspruch 1, 2 oder 3, wobei die Ausgabebaugruppe (3) eine peripher montierte divergente Düse (10) umfasst.

5. Windturbine nach Anspruch 4, wobei die peripher montierten Düsen (9, 10) der Einlass- und Ausgabebaugruppe zusammen eine de-Laval-Düse definieren und wodurch die ringförmigen Ringe der Flügelprofilblätter (5, 6) beider Baugruppen an der Kehle der de-Laval-Düse positioniert sind.

6. Windturbine nach einem der Ansprüche 3 bis 5, wobei die kuppelförmige Nabe (8) der Ausgabebaugruppe (3) eine oder mehrere betriebliche Komponenten des Generators aufnimmt.

7. Windturbine nach einem der vorhergehenden Ansprüche, wobei die kuppelförmige Nabe (7) der Einlassbaugruppe (2) eine oder mehrere betriebliche Komponenten des Generators aufnimmt.

8. Windturbine nach Anspruch 4, wobei die peripher montierte divergente Düse (10) der Ausgabebaugruppe (3) ein flexibles Material umfasst, das von einem an der Ausgabebaugruppe montierten strukturellen Rahmen getragen wird, wobei die Düse dazu konfiguriert ist, bei starken Windbedingungen zu versagen, was wiederum den von der Windturbine gebotenen Windwiderstand reduziert.

9. Windturbine nach einem der vorhergehenden Ansprüche, wobei eine oder mehrere der kuppelförmigen Naben (7, 8) paraboloid sind.

10. Windturbine nach einem der vorhergehenden Ansprüche, wobei die Einlass- (2) oder Ausgabebaugruppe (3) eine zentrale Achse (4) umfasst, auf der die andere Baugruppe drehbar montiert ist.

11. Windturbine nach einem der Ansprüche 1-9, wobei die Einlassbaugruppe (2) und die Auslassbaugruppe (3) beide drehbar auf einer zentralen Achse (4) montiert sind.

12. Windturbine nach einem der Ansprüche 10 oder 11, wobei die zentrale Achse (4) angeordnet ist, um an einer Tragstruktur montiert zu sein, die das Gewicht der Windturbine (1) trägt.

13. Windturbine nach Anspruch 10, 11 oder 12, wobei mindestens eine kuppelförmige Nabe (7, 8) auf der zentralen Achse (4) montiert ist, um so die ringförmigen Ringe der Flügelprofilblätter (5, 6) in Position zu halten.

## Revendications

1. Éolienne (1) comprenant un ensemble d'entrée (2) et un ensemble de sortie (3) situés à proximité l'un de l'autre sur un axe commun, lesdits ensembles (2, 3) pouvant tourner l'un par rapport à l'autre pour faire fonctionner un générateur qui génère de l'énergie électrique ;
chaque ensemble (2, 3) comportant un anneau de pales à profil aérodynamique (5, 6) dans lequel chacune des pales de l'ensemble d'entrée (5) a un premier pas et chacune des pales de l'ensemble de sortie (6) a un second pas qui est orienté à l'opposé du premier pas ;
l'ensemble d'entrée (2) comportant un moyeu en forme de dôme (7) situé au centre et une buse convergente montée sur la périphérie (9), lesdits moyeu et buse étant configurés pour diriger l'air se déplaçant à travers l'éolienne vers les pales à profil aérodynamique (5, 6) des ensembles d'entrée et de sortie ;
dans lequel les pales à profil aérodynamique (5 ,6) d'au moins l'un des ensembles d'entrée et de sortie sont agencées de manière à se chevaucher de telle sorte que, lorsque aperçus depuis le long de l'axe de rotation commun, il est impossible de voir à travers l'éolienne ; et
**caractérisé en ce que** la buse convergente montée sur la périphérie (9) de l'ensemble d'entrée (2) est formée à partir d'un matériau souple que supporte un cadre structurel monté sur l'ensemble d'entrée, dans lequel la buse (9) est configurée pour chuter dans des conditions de vents forts, ce qui a pour effet de réduire la résistance du vent qu'assure l'éolienne (1).

2. Éolienne selon la revendication 1, dans lequel les pales à profil aérodynamique (5, 6) à la fois de l'ensemble d'entrée et de l'ensemble de sortie sont agencées de manière à se chevaucher.

3. Éolienne selon soit la revendication 1, soit la revendication 2, dans lequel l'ensemble de sortie (3) comprend un moyeu en forme de dôme (8) situé au centre.

4. Éolienne (1) selon soit la revendication 1, soit la revendication 2 ou la revendication 3, dans lequel l'ensemble de sortie (3) comprend une buse divergente montée sur la périphérie (10).

5. Éolienne selon la revendication 4, dans lequel les buses montées sur la périphérie (9, 10) des ensembles d'entrée et de sortie définissent ensemble une buse de Laval et en vertu duquel les anneaux des pales à profil aérodynamique (5, 6) des deux ensembles sont situés au niveau du bec de la buse de Laval.

6. Éolienne selon l'une quelconque des revendications 3 à 5, dans lequel le moyeu en forme de dôme (8) de l'ensemble de sortie (3) abrite un ou plusieurs composants opérationnels du générateur.

7. Éolienne selon l'une quelconque des revendications précédentes, dans lequel le moyeu en forme de dôme (7) de l'ensemble d'entrée (2) abrite un ou plusieurs composants opérationnels du générateur.

8. Éolienne selon la revendication 4, dans lequel la buse divergente montée sur la périphérie (10) de l'ensemble de sortie (3) comprend un matériau souple que soutient un cadre structurel monté sur l'ensemble de sortie, dans lequel la buse est configurée pour chuter dans des conditions de vents forts, ce qui a pour effet de réduire la résistance du vent qu'assure l'éolienne.

9. Éolienne selon l'une quelconque des revendications précédentes, dans lequel un ou plusieurs moyeux des moyeux en forme de dôme (7, 8) sont paraboloïdes.

10. Éolienne selon l'une quelconque des revendications précédentes, dans lequel l'ensemble d'entrée (2) ou l'ensemble de sortie (3) comprend un axe central (4) sur lequel est monté l'autre ensemble de façon à pouvoir tourner.

11. Éolienne selon l'une quelconque des revendications 1 à 9, dans lequel l'ensemble d'entrée (2) et l'ensemble de sortie (3) sont tous deux montés de façon à pouvoir tourner sur un axe central (4).

12. Éolienne selon l'une quelconque des revendications soit 10, soit 11, dans lequel l'axe central (4) est agencé de telle sorte à être monté sur une structure de soutien qui supporte le poids de l'éolienne (1).

13. Éolienne selon soit la revendication 10, soit la revendication 11 ou la revendication 12, dans lequel au moins un moyeu en forme de dôme (7, 8) est monté sur l'axe central (4), de telle sorte à maintenir les anneaux des pales à profil aérodynamique (5, 6) en position.
